# EUROPEAN PATENT APPLICATION

(11) **EP 3 836 092 A1**
(43) Date of publication of application: **16.06.2021**
(21) Application number: 19845990.1
(22) Date of filing: 07.08.2019
(51) Int. Cl.: G06T 13/20, G06F 3/0484, G06Q 30/02

(54) **MOBILE TERMINAL AND MANAGEMENT SERVER**

(30) Priority: 10.08.2018 JP 2018150923
(71) Applicant: Fujikawa Resin Inc., Sakai-shi, Osaka 587-0012 (JP)
(72) Inventor: FUJIKAWA, Katsuya, Sakai-shi, Osaka 587-0012 (JP)
(74) Representative: Horn Kleimann Waitzhofer Patentanwälte PartG mbB
(86) International application number: PCT/JP2019/031106
(87) International publication number: WO 2020/032097

(57) **Abstract**

[Problem]

The present invention provides a portable terminal for easily and detailedly displaying a model object in real time based on shape information of the model object by an operation of an operator while giving the operator a feeling as if the operator operates a real product by realistic texture of the model object produced by the surface information.

[Solution]

The portable terminal includes: a display capable of displaying a real-time visualized 3D model which is a three-dimensionally visualized image of a model object where a display state of the model object is changed in real time, and additional information related to the model object; a plurality of operation portions for changing the display state of the real-time visualized 3D model and the additional information displayed on the display by an operation of a user; and a controller for controlling the display and the operation portions.

## Description

### TECHNICAL FIELD

The present invention relates to a portable terminal for displaying a 3D model and a management server to which the portable terminal is connected.

### BACKGROUND ART

In recent years, the portable terminal is spread rapidly and some people try to perform business activities smoothly by using the portable terminal. For example, in a work management device disclosed in Patent Document 1, the efficiency of the business activities is improved by transmitting a schedule of business activities to the portable terminal of a user who goes out of the office for the business activities. As described above, it is now normal to carry the portable terminal during the business activities out of the office.

Incidentally, a display device for displaying a three-dimensional model (3D model) on the above described portable terminal has conventionally existed where the three-dimensional model is displayed based on three-dimensional modeling data including three-dimensional computer graphic data (3D CG). For example, a mobile display device disclosed in Patent Document 1 is a device for displaying at least one of a 3D viewing and a 2D viewing of the contents on the mobile display device by the selection of the user of the portable terminal.

In the above described portable terminal, the 3D model is displayed using the 3D viewing at desired angle and size by the operation of the user. In particular, the mobile display device disclosed in Patent Document 1 is compatible with both the 3D viewing and the 2D viewing, and has a 3D display for providing a stereoscopic viewing. Thus, the mobile display device disclosed in Patent Document 1 is excellent for displaying the 3D model.

### PRIOR ART DOCUMENTS

### [Patent Documents]

Patent Document 1: JP 2017-151847A
Patent Document 2: JP 2017-208821A

### DISCLOSURE OF THE INVENTION

### [Problems to be Solved by the Invention]

However, the above described portable terminal mainly displays only the 3D model comprising of the 3D CG data. Namely, since the 3D CG data does not include shape information of a model object, it is difficult to easily and detailedly display the 3D model in real time by an operation of an operator. In addition, in case of the 3D model comprises only of the 3D CG data, since the actual shape information of the 3D model related to the model object is not included, it is difficult to make a change or apply an addition to the 3D model relating to the shape information.

In particular, when the portable terminal is used at the other business party, a person in charge of business often thinks that it is difficult to use a business tool including a large amount of information and thinks that the correct shape information achieved by the 3D CAD is not required for displaying the 3D model on the portable terminal.

The present invention considers the above described problems and aims for providing a portable terminal for easily and detailedly displaying a model object in real time based on the shape information of the model object according to an operation of an operator while giving the operator a feeling as if the operator operates a real product by realistic texture of the model object produced by the surface information.

### [Means for Solving the Problem]

(1) A portable terminal concerning the present invention includes: a display capable of displaying a real-time visualized 3D model which is a three-dimensionally visualized image of a model object where a display state of the model object is changed in real time, and additional information related to the model object; a plurality of operation portions for changing the display state of the real-time visualized 3D model and the additional information displayed on the display by an operation of a user; and a controller for controlling the display and the operation portions.
   The 3D modeling data for displaying the real-time visualized 3D model comprises of the shape information of correct dimension, shape, scale and the like of the model object as represented by the 3D CAD data, and the surface information including the information of texture, color, gloss and the like of the model object as represented by the 3D CG data.
   In the above described portable terminal, the real-time visualized 3D model which is a three-dimensionally visualized image of a model object is displayed while a display state of the model object is changed in real time by the 3D modeling data comprised of the shape information and the surface information. Thus, the model object can be easily and detailedly displayed in real time based on the shape information of the model object according to the operation of the operator while giving the operator a feeling as if the operator operates a real product by realistic texture of the model object produced by the surface information.
   Furthermore, the additional information can be displayed in addition to the real-time visualized 3D model. Thus, more detailed information of the model object can be easily and detailedly displayed. Accordingly, the present invention can provide high convenience as a business tool. Furthermore, the actual shape information of the real-time visualized 3D model related to the model object is included in the modeling data, and the change can be made or the addition can be applied to the real-time visualized 3D model relating to the shape information. Consequently, affordance is given to the user who uses the portable terminal, and a feeling as if the user operates a real product (i.e., model object) is given to the user.
(2) In the above described portable terminal, the model object can have a movable member, the display can include a touch panel display to function as the operation portions, and the movable member of the real-time visualized 3D model can be configured to be moved when the user operates the touch panel display by making a fingertip contact the touch panel display.
   In the above described portable terminal, the user can change the display state of the real-time visualized 3D model in real time by the operation of the touch panel display. Thus, the user can operate the 3D model intuitively. Accordingly, affordance is given to the user who uses the portable terminal, and a feeling as if the user operates a real product (i.e., model object) is given to the user. In particular, when the motion of the movable member is adjusted in accordance with the actual motion of the model object or the speed of the motion is adjusted while being emphasized more than the actual motion, the feeling as if the user operates a real product can be more strongly given to the user.
(3) In the above described portable terminal, the model object can have a movable member, the operation portions can have an automatic motion selection means which makes the movable member automatically perform a predetermined motion in the real-time visualized 3D model, and the movable member can be configured to automatically perform the predetermined motion in the real-time visualized 3D model when the automatic motion selection means is operated. In the above described portable terminal, the motion of the movable model object to be impressed (emphasized) the most can be offered to the user by a predetermined animation with a more realistic feeling.
(4) In the above described portable terminal, the model object can have an indicator which can be turned on or turned off, the operation portions can have a turning-on selection means which turns on the indicator in the real-time visualized 3D model or have a turning-off selection means which turns off the indicator in the real-time visualized 3D model, the indicator can be turned on in the real-time visualized 3D model when the turning-on portion is selected, and the indicator is turned off in the real-time visualized 3D model when the turning-off portion is selected. Furthermore, the indicator can be turned on or turned off while interlocking with the motion of the movable member.
   In the above described portable terminal, the turning-on and the turning-off of the indicator can be expressed in the 3D model of the model object having the indicator. Thus, the feeling as if the operator operates a real product can be strongly given to the user. In particular, when the turning-on and the turning off of the indicator is adjusted in accordance with the actual motion of the model object or the change in the intensity or speed is adjusted while being emphasized more than the actual motion, the feeling as if the operator operates a real product can be more strongly given to the user.
(5) The additional information can include at least one of a list of the accessories, a price list, a specification table, a moving image, a voice and a caution sentence which are related to the real-time visualized 3D model. In the above described configuration, the detailed information of the model object can be provided in addition to the information of the realistic texture and motion of the information of the 3D model. Thus, the business activities can be smoothly performed. In particular, the information of the list of the accessories can be associated with the 3D CAD data and the accessories can be additionally displayed on the 3D model data. Thus, the detailed information can be provided.
(6) The above described portable terminal can further have a storage which stores operation information operated on the operation portions. In the above described configuration, the information operated on the plurality of operation portions for changing the display state of the 3D model is stored. Thus, operation log can be obtained based on the information where the 3D model is operated, and the operation log can be used for various judgement. For example, the operation log can be used when judging how a person in charge of business performs the business activities properly in the business activities.
   In addition, in the above described portable terminal, the operation information can include the number of times of operating the operation portions by the user, operation time and transition of the real-time visualized 3D model, for example. In the above described configuration, the operation information is obtained by limiting the information to the information of the basic operations of the real-time visualized 3D model. Thus, only the information required for making various judgement can be obtained. For example, the information required for judging how a person in charge of business performs the business activities properly in the business activities can be obtained.
   In addition, the above described portable terminal can be connected with a server which obtains the operation information operated on the operation portions. In the above described configuration, the operation information (i.e., operation log) can be managed integrally by the management server. When the operation log of a large number of portable terminals is used, the operation log can be used for various judgement. For example, the operation log can be used when judging how a person in charge of business performs the business activities properly in the business activities.
   In addition, the above described portable terminal can further have an authentication unit which authenticates the user, and the portable terminal can authenticate the user and store the operation information for each user. In the above described portable terminal, the user of the portable terminal can be specified. Consequently, the operation information can be managed and analyzed in association with the user.
   In addition, the above described authentication unit can authenticate the user using the authentication of an access key, fingerprint, face or the like and history of them. In the above described configuration, the user can be easily distinguished.
   As described above, in the portable terminal of the present invention, the outer shape information (e.g. dimension information of height, width direction, depth) of the real-time visualized 3D model can be displayed as the additional information together with the real-time visualized 3D model. Here, it was pointed out that it was difficult to judge whether or not an object having the displayed dimension information could be placed in a certain space, or difficult to image a sense of scale or the like with respect to the certain space when only the dimension information of the real-time visualized 3D model was displayed.
   After the above described problem was pointed out, the inventor of the present invention considered how to improve the problem. The inventor found that the above described problem could be improved by displaying lines with a prescribed pitch like a grid line when displaying the real-time visualized 3D model.
(7) The portable terminal of the present invention provided based on the above described knowledge is characterized in that the additional information includes dimension reference information for grasping dimensions of the real-time visualized 3D model, and the display can display the dimension reference information together with the real-time visualized 3D model. In the above described configuration, the sense of scale (e.g., height direction, depth direction, width direction) of the real-time visualized 3D model can be more easily grasped. For example, when the lines (dimension reference lines) are displayed with a predetermined pitch together with the real-time visualized 3D model, it becomes easy to visually grasp and image how many pitches are required for placing the object (when the lines are displayed with the pitch or interval of 10 centimeters, for example).
(8) In the above described portable terminal, when a three-dimensional box-shaped area including an outermost area of the real-time visualized 3D model in a three-dimensional direction is defined as an outer area in a virtual space for displaying the real-time visualized 3D model on the display, it is preferred that the dimension reference information is displayed while the dimension reference information is positioned relatively to the real-time visualized 3D model by using one point of the outer area as a reference position. In the above described configuration, the sense of scale of the model object (e.g. whether or not excess space exists) with respect to the space for placing the product or the like of the model object can be intuitively grasped by the user.
(9) In the above described portable terminal, it is preferred that the position of the dimension reference information can be moved relatively to the real-time visualized 3D model.
   In the above described configuration, how the model object is arranged within the space for placing the product of the model object or the space required for the installation can be intuitively grasped by the user.
(10) In the virtual space formed on the display for displaying the real-time visualized 3D model, when a three-dimensional box-shaped area including an outermost area of the real-time visualized 3D model in a three-dimensional direction is defined as an outer area in a virtual space for displaying the real-time visualized 3D model on the display, it is preferred that the dimension reference information can be displayed in a range including the outer area of the real-time visualized 3D model. In the above described configuration, the minimum information required for grasping the sense of scale of the model object can be displayed. In other words, the dimension reference information (e.g., grid line) is prevented from being excessively displayed not to conceal the real-time visualized 3D model. Because of this, the result of obstructing to grasp the sense of scale of the model object can be avoided. As a result, the portable terminal of the present invention can display the modeling image more simply. Thus, the sense of scale of the model object can be grasped more efficiently.
   Here, it is assumed that various accessories (e.g., optional products) are attached to the product of the model object in addition to the body of the product. When the accessories are attached to the outside of the body of the product, it is assumed that the outer shape of the entire product varies. The dimension of the accessory itself is not so important since the accessory is not considered to be used alone. However, it is demanded that the housing space and the sense of scale should be grasped in advance for the product to which the accessories are attached.
(11) In order to satisfy the above described request, it is preferred that the additional information includes accessory information which is information related to accessories attachable to the model object of the real-time visualized 3D model, and the accessory information can be displayed only when the real-time visualized 3D model is displayed while the accessories are attached to the model object. In the above described configuration, the user who considers to add the accessories can preliminarily judge whether or not the product of the model object can be arranged on the space in a state that the accessories are attached. Namely, the user can preliminarily judge whether or not the accessories are attachable while considering the space for arranging the product in the three-dimensional direction.
(12) In the above described portable terminal, it is preferred that the dimension reference information can be displayed in a state that the real-time visualized 3D model is displayed while the accessories are attached to the model object. In the above described configuration, the user who considers to add the accessories can preliminarily judge whether or not the product of the model object can be arranged on the space while the accessories are attached easily by intuitively grasping the sense of scale.
(13) In the above described portable terminal, when a three-dimensional box-shaped area including an outermost area of the real-time visualized 3D model in a three-dimensional direction is defined as an outer area in a virtual space for displaying the real-time visualized 3D model on the display, it is preferred that the dimension reference information can be displayed in a range including the outer area of the real-time visualized 3D model while the accessories are attached to the model object. In the above described configuration, the minimum information required for grasping the sense of scale of the model object can be displayed.
   In other words, the dimension reference information (e.g., grid line) is prevented from being excessively displayed not to conceal the real-time visualized 3D model. Because of this, the result of obstructing to grasp the sense of scale of the model object can be avoided.
   As a result, the portable terminal of the present invention can display the modeling image more simply. Thus, the sense of scale of the model object can be grasped more efficiently.
(14) The management server concerning the present invention is connected with the portable terminal. In the above described portable terminal, the operation log can be managed integrally by the management server. When the operation log of a large number of portable terminals is used, the operation log can be used for various judgement. For example, the operation log can be used when judging how a person in charge of business performs the business activities properly in the business activities.
(15) In the above described management server, an artificial intelligence can be further provided and the artificial intelligence can establish an optimum operation method of the operation portions based on the obtained operation information. In the above described management server, the artificial intelligence can statistically process various judgement by using a large amount of operation log which is normally difficult to be processed. For example, artificial intelligence can judge how a person in charge of business performs the business activities properly in the business activities.
(16) The above described portable terminal has a GPS function and characterized in that the portable terminal obtains moving information of an owner of the portable terminal by the GPS function. In the above described configuration, the position where the portable terminal is used can be identified and various judgement is enabled by adding the positional information to the operation log.

### [Effects of the Invention]

The present invention can provide a portable terminal for easily and detailedly displaying a model object in real time based on the shape information of the model object according to an operation of an operator while giving the operator a feeling as if the operator operates a real product by realistic texture of the model object produced by the surface information.

### BRIEF DESCRIPTION OF THE DRAWINGS

Fig. 1 is a drawing showing an operation form of a portable terminal and a management server of an embodiment of the present invention.
Fig. 2 is a block diagram schematically showing a hardware configuration of the portable terminal of the present invention.
Fig. 3 is a block diagram showing a functional block constructed when the portable terminal of the present invention operates an application for displaying the 3D model.
Fig. 4 is a drawing showing the 3D model displayed on a display of the portable terminal of the present invention. (A) shows a drawing where a plate member is housed in a body of the 3D model in a state that a door member is closed. (B) shows a drawing where the plate member is projected from the body of the 3D model in a state that the door member is closed.
Fig. 5 is a drawing showing the 3D model displayed on a display of the portable terminal of the present invention. (A) shows a drawing where the plate member is housed in the body of the 3D model in a state that the door member is opened. (B) shows a drawing where the plate member is projected from the body of the 3D model in a state that the door member is opened.
Fig. 6 is a plan view showing the portable terminal of the present invention in a state that the 3D model is displayed on the display.
Fig. 7 is a screen diagram showing an embodiment of the display displaying the 3D model.
Fig. 8 is a screen diagram where the state of the 3D model shown in Fig. 7 is changed.
Fig. 9 is a screen diagram showing another embodiment of the display displaying the 3D model.
Fig. 10 is a screen diagram where the state of the 3D model shown in Fig. 9 is changed.
Fig. 11 is a screen diagram showing another embodiment of the display displaying the 3D model.
Fig. 12 is a screen diagram where the state of the 3D model shown in Fig. 11 is changed.
Fig. 13 is a screen diagram where the state of the 3D model shown in Fig. 12 is changed.
Fig. 14 is a screen diagram showing another embodiment of the display displaying the 3D model.
Fig. 15 is a screen diagram where the state of the 3D model shown in Fig. 14 is changed.
Fig. 16 is a screen diagram showing another embodiment of the display displaying the 3D model.
Fig. 17 is a screen diagram showing another embodiment of the display displaying the 3D model.
Fig. 18 is a screen diagram showing the second embodiment of the display displaying the 3D model.
Fig. 19 is a drawing showing an outer area and dimension reference information of the 3D model shown in Fig. 18 in a perspective view. (A) shows the outer area, and (B) shows a state that the dimension reference information is displayed in addition to the outer area.
Fig. 20 is a drawing showing the outer area and the dimension reference information of the 3D model shown in Fig. 18 in a front view. (A) shows the outer area, and (B) shows a state that the dimension reference information is displayed in addition to the outer area.
Fig. 21 is a screen diagram showing a state that the position of the dimension reference information of the 3D model shown in Fig. 18 is changed.
Fig. 22 is a screen diagram showing the third embodiment of the display displaying the 3D model.
Fig. 23 is a screen diagram showing a state that the outer area and dimension reference lines are displayed together with the 3D model shown in Fig. 22.
Fig. 24 is a drawing showing the outer area and the dimension reference information of the 3D model shown in Fig. 22 in a front view. (A) shows the outer area, and (B) shows a state that the dimension reference information is displayed in addition to the outer area.

### MODES FOR CARRYING OUT THE INVENTION

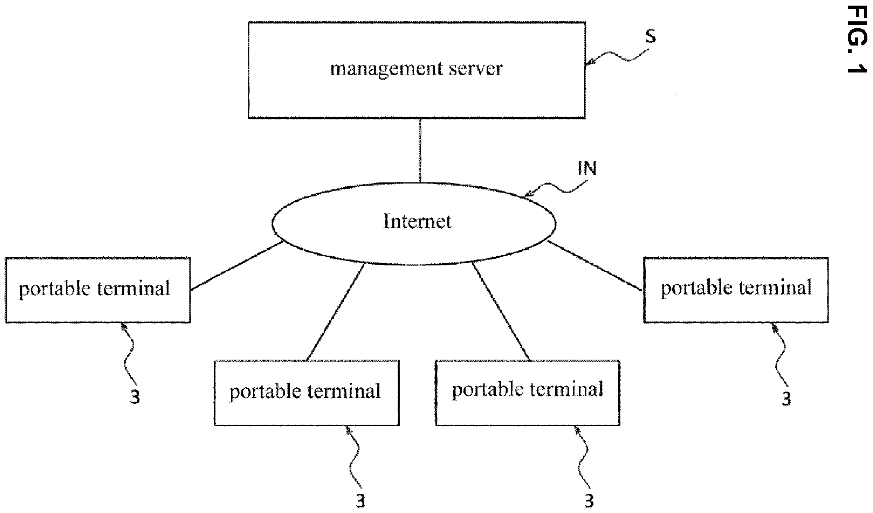

A portable terminal 1 and a management server S of the embodiment of the present invention will be explained in detail with reference to the drawings. As shown in Fig. 1, the portable terminal 1 is connected with the management server S via the Internet IN and can communicate with the management server S. In the present embodiment, the portable terminal 1 is possessed by a so-called person in charge of business who is in charge of business activities of a company when he/she visits the other business party. In addition, the management server S is managed by a manager of the company.

As explained later, the portable terminal 1 and the management server S of the present invention have 3D modeling data of a predetermined model object. Basic information (hereafter, also referred to merely as "basic information") of a real-time visualized 3D model (hereafter, also referred to merely as "3D model") M, operation information (hereafter, also referred to merely as "operation information" of the 3D model M, additional information (hereafter, also referred to merely as "additional information") of the 3D model M and the like are included. The 3D model M is displayed on the portable terminal 1 based on the 3D modeling data including the shape information and the surface information.

Here, the shape information is the information used in the CAD (Computer Aided Design) system which is conventionally well known, and the shape information includes the data of dimension, shape, scale and the like of the model object. In addition, the surface information is the information used in the CG (Computer Graphics), and the surface information includes the data for expressing texture, color, gloss and the like of the model object.

Consequently, the real-time visualized 3D model includes the shape information and the surface information in the modeling data. Thus, the model object can be three-dimensionally visualized and the display state can be changed in real time. Accordingly, in the real-time visualized 3D model, the model object can be easily and detailedly displayed in real time based on the shape information of the model object according to the operation of the operator while giving the operator a feeling as if the user operates a real product by realistic texture of the model object produced by the surface information.

The basic information includes the shape information, the surface information and the like of the 3D model for expressing the actual state of the model object. The operation information includes the information of moving range, speed, direction and the like of the movable member of the model for expressing the actual motion of the model object. The additional information includes a list of the accessories, a price list, a specification table, a moving image, a voice, a caution sentence and the like.

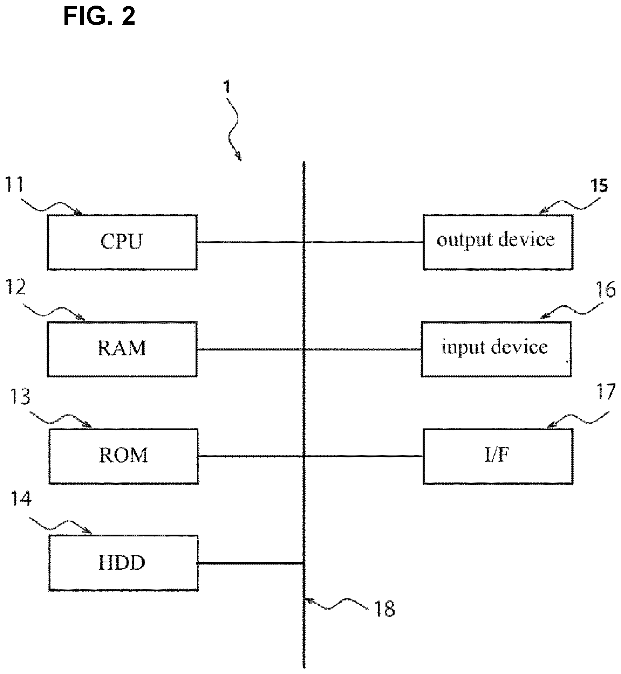

The portable terminal 1 of the present embodiment is, for example, a tablet terminal or a smartphone which is conventionally well known. As a hardware configuration, as shown in Fig. 2, the portable terminal 1 includes a CPU (Central Processing Unit) 11, a RAM (Random Access Memory) 12, a ROM (Read Only Memory) 13, a HDD (Hard Disk Drive) 14, an output device 15, an input device 16 and an I/F 17. The above described components are connected with each other via a bus 18.

The CPU 11 is a conventionally well-known calculation means, and the CPU 11 controls the operation of the entire portable terminal 1. The RAM 12 is a volatile storage medium which reads and writes the information at high speed. The RAM 12 functions as a working area when the CPU 11 processes the information. The ROM 13 is a read-only non-volatile storage medium. Programs such as a firmware is stored in the ROM 13.

The HDD 14 is a non-volatile storage medium for reading and writing the information. OS (Operating System), various control programs, applications (hereafter, also referred to merely as "application") and the like are stored in the HDD 14. In the present embodiment, the HDD 14 stores the application for displaying the 3D model. The later described embodiment of displaying the 3D model is achieved when the application for displaying the 3D model is operated.

The output device 15 is a user interface such as an LCD (Liquid Crystal Display) for an operator (hereafter, also referred to as "user") of the portable terminal 1. In the portable terminal of the present embodiment, the output device 15 includes a touch panel display.

The input device 16 includes various hardware buttons, a touch panel and the like. The input device 16 is a user interface for operating the portable terminal 1 by the user. In the present embodiment, the touch panel display is included as the output device 15, and the touch panel display also functions as the input device 16. In addition, the input device 16 can have a fingerprint information acquisition device for fingerprint authentication and a camera for photographing images, for example.

The I/F 17 connects the portable terminal 1 with other various hardware and network, for example. Specifically, the I/F 17 can be a wired connection device such as a connector and a wireless connection device such as Bluetooth (registered trademark).

In the above described hardware configuration, the programs and applications stored in the recording media such as the ROM 13, HDD 14, the optical disk or the like are read out to the RAM 12, and the CPU 11 performs arithmetic operation according to the programs. Thus, the functional block is constructed according to the read-out programs and applications.

In addition, the portable terminal 1 can have a positional information transmitting device such as a GPS for providing the positional information. In addition, the hardware configuration of the portable terminal 1 can be replaced with other hardware configuration (e.g., SSD (Solid State Drive) instead of the HDD 14) as long as the information can be processed appropriately.

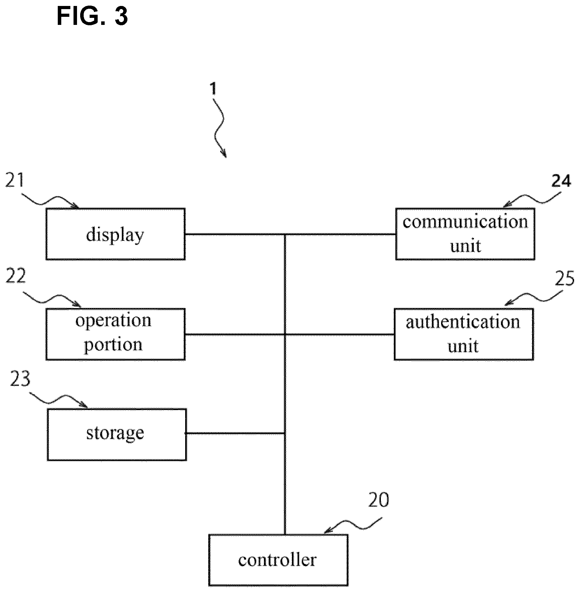

Next, the functional block constructed when the application for displaying the 3D model is operated by the portable terminal 1 of the embodiment of the present invention will be explained. Namely, the functional block diagram shown in Fig. 3 is constructed by starting the application for displaying the 3D model on the portable terminal 1.

As shown in Fig. 3, as the functional block, the portable terminal 1 has a display (display unit) 21 for displaying the 3D model M, an operation portion 22 for operating the 3D model M displayed on the display 21, a storage (storage unit) 23 for storing the basic information, the operation information, the additional information and the like of the 3D model M, a communication unit 24 for making the portable terminal 1 communicate with the external devices such as a server, an authentication unit 25 for identifying the user of the portable terminal 1, and a controller (control unit) 20 for controlling each component.

In a state that the application for displaying the 3D model is operated, the display 21 can display the real-time visualized 3D model M based on the 3D modeling data including the shape information and the surface information related to the object of the 3D model M stored in the storage 23, the additional information related to the model object, and the like. Consequently, the 3D model M displayed on the display 21 has the same appearance and motion as the model object.

According to the operation of the user, the operation portion 22 changes the display state of the 3D model M, the additional information, buttons 111, icons 112 and the like displayed on the display 21. In the present embodiment, in addition to the hardware buttons 111 provided on the portable terminal 1, the touch panel constituting the display 21 also functions as the operation portion 22.

The touch panel, which is the operation portion 22, makes the 3D model M perform a predetermined motion when the buttons 111 and the icons 112 displayed on the touch panel are touched. For example, in order to activate an animation function for automatically moving the 3D model M, when the operating button (automatic motion selection means) of the automatic motion program is touched, it is possible to make the 3D model M automatically perform a predetermined preliminarily-programmed motion.

In addition, the touch panel makes the 3D model M perform a predetermined motion when the user performs a predetermined motion while the fingertip is in contact with the touch panel. For example, when the user touches the touch panel with two fingertips and pinches out the screen by expanding both fingers while the fingers are in contact with the screen, the 3D model M is displayed in an enlarged state. In addition, for example, when the 3D model M displayed on the touch panel is touched by one fingertip and swipes the screen by moving the fingertip while the fingertip is in contact with the screen, the 3D model M can be moved in the screen.

As explained above, the operation portion 22 can change the state of the displayed 3D model M so as to move the 3D model M when the user operates the operation portion 22 while the fingertip is in contact with the display 21. The above described operation using the touch panel can make the user image the motion of the 3D model M intuitively and give the user affordance.

The storage 23 stores the information such as the basic information, the operation information and the additional information of the 3D model M. When the 3D model M is displayed by using the information such as the basic information, the operation information and the additional information, a feeling as if the user operates a real product (i.e., model object) is given to the user and the necessary information of the 3D model M can be easily obtained.

In addition, the storage 23 stores the operation information operated by the user as the operation log. The operation information includes the location and time where the operation portion 22 is operated, the number of times of operating the operation portion 22, and the transition of the 3D model M, for example. Note that the geographic location where the portable terminal 1 is operated can be obtained by the GPS.

The communication unit 24 transmits and receives the information with respect to the network and the external device connected with the portable terminal 1. For example, the operation log of the portable terminal 1 is transmitted to the management server S via the Internet IN, or editing information having the edited operation log is obtained from the management server S.

The authentication unit 25 authenticates the user who operates the portable terminal 1. The authentication unit can authenticate the user using the authentication of an access key, fingerprint, face or the like and history of them. The access key is input from the touch panel which is included in the input device. The face authentication and the like is acquired by a camera which is included in the input device 16. The fingerprint is acquired by a fingerprint acquisition device which is included in the input device 16.

The controller 20 controls each part of the functional block of the portable terminal 1 such as the display 21, the operation portion 22, the storage 23 and the communication unit 24. In addition, the controller can establish a GPS (Global Positioning System) in cooperation with the positional information transmitting device to obtain the positional information of the portable terminal 1.

By using the above described functional block, the display 21 three-dimensionally displays the model object as the 3D model M, and the display state of the 3D model M is changed in real time according to the operation when the 3D model M is operated on the operation portion 22. In addition, when the user touches the operation portion 22 (i.e., various buttons 111 and icons 112) displayed on the display 21, the additional information can be displayed, the 3D model M can be moved, and various setting conditions can be displayed.

Consequently, the model object can be easily and detailedly displayed in real time according to the operation of the operator while giving the user a feeling as if the user operates a real product by realistic texture of the model object expressed on the 3D model M.

In addition, the portable terminal 1 can be connected with the management server S via the communication unit 24 to transmit the operation log stored in the storage 23 to the management server. Furthermore, since the user who uses the portable terminal 1 can be identified by the authentication unit 25, the portable terminal 1 can store the operation log for each user.

Furthermore, the portable terminal 1 of the embodiment of the present invention is connected with the management server S. The management server S has a server function which is conventionally well known. The management server S stores the operation log operated by the user in the management server S. The management server S can extract the necessary operation log from a large amount of accumulated operation log when needed.

In addition, the portable terminal 1 has an authentication function such as image authentication, fingerprint authentication and ID authentication to identify the user. Thus, the operation log stored in the management server S can identify the user who operates the portable terminal 1 and analyze a large amount of operation log.

In addition, the management server S constitutes a so-called artificial intelligence (AI) by hardware and software. The artificial intelligence constituted by the management server S extracts the required operation log from a large amount of operation log stored in the management server S. Thus, behavior analysis and psychological analysis of the user of the portable terminal 1 is enabled. For example, the operation log performed by the user with good business performance is collected to constitute a specific operation procedure of the portable terminal 1.

In addition, the editing information of the operation log analyzed or constituted by the artificial intelligence is stored in the management server S, and the portable terminal 1 connected with the management server S can obtain the editing information from the management server S. As explained above, the portable terminal 1 and the management server S analyze the operation log of the user by cooperating with each other.

### [Examples]

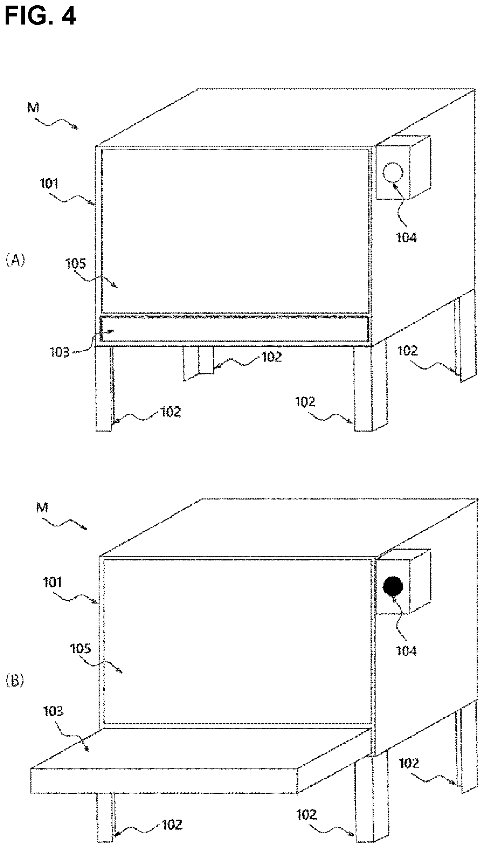

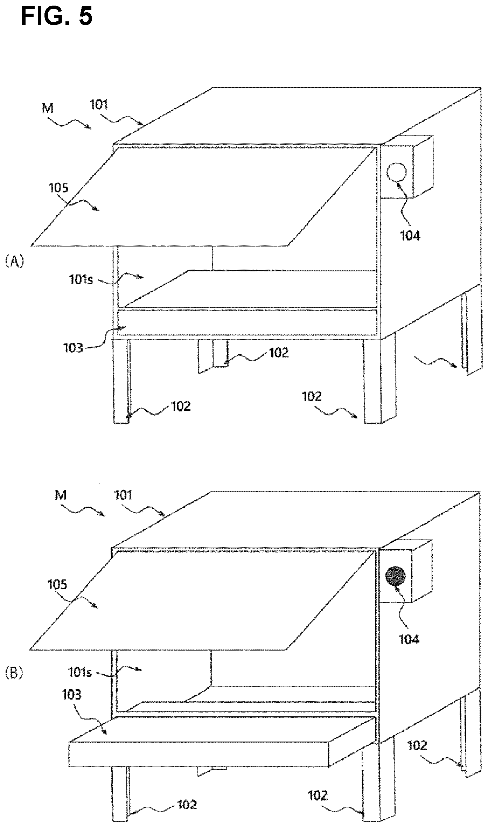

Next, the examples of the 3D model M displayed on the portable terminal 1 of the embodiments of the present invention will be explained. Figs. 4 and 5 are screen diagrams showing the 3D model M displayed on the display 21.

As for the 3D model M, the model object (hereafter, also referred to merely as "actual equipment") is displayed on the portable terminal 1. In the following explanation, the 3D model M of the actual equipment displayed on the portable terminal 1 will be explained. Accordingly, unless otherwise stated, the 3D model M is formed by reproducing the actual equipment which actually exists, and the 3D model M moves similar to the actual equipment which actually exists.

The actual equipment of the 3D model M has an approximately rectangular body 101 which is supported by four legs 102, a plate member 103 which is housed in the body 101 and moves so as to protrude frontward of the body 101, a power source (not illustrated) for moving the plate member 103, a guide portion (not illustrated) which is provided on the body 101 for guiding the motion of the plate member 103, and an indicator 104 which is provided on the front surface of the body 101.

The plate member 103 is movable from the state housed in the body 101 (shown in Fig. 4(A)) to the state projected frontward of the body 101 (shown in Fig. 4(B)). The indicator 104 is turned off in the state that the plate member 103 is housed, and the indicator 104 is turned on in the state that the plate member 103 is projected.

The body 101 having a rectangular parallelepiped shape is supported by four legs 102 and arranged at a predetermined height position. In addition, the body 101 has a door member 105 for opening and closing the front surface of the rectangular parallelepiped shape. The door member 105 rotates around the upper end of the front surface of the body 101as an axis so that the front surface of the body 101 is opened and closed. Consequently, inside the body 101 can be confirmed in a state that the door member 105 is opened (shown in Fig. 5). A housing space 101s is formed inside the body 101 for housing the plate member 103.

Furthermore, the body 101 has an opening opened to the front surface at the lower side of the door member 105 so that the plate member 103 can be housed. Thus, the plate member 103 can be housed inside the body 101 via the opening. The opening is formed in an approximately rectangular shape in accordance with the plate member 103, extended in the depth direction, and communicated with the housing space 101s. Consequently, the plate member 103 is taken in and out from the housing space 101s via the opening.

The plate member 103 has a length dimension same as a depth dimension of the body 101. In a state that the plate member 103 is housed in the body 101 as shown in Fig. 4(A), the plate member 103 is entirely housed in the housing space 101s of the body 101. In addition, in a state that the plate member 103 is projected from the body 101 as shown in Fig. 4(B), only a part of the plate member 103 located at the depth side is housed in the housing space 101s of the body 101.

The power source is constituted by a so-called motor. The power source pulls the plate member 103 in the housing space 101s to house the plate member 103 in the body 101 and pushes the plate member 103 out of the housing space 101s so that the plate member 103 is projected from the body 101. Namely, when the power source is operated, the 3D model is switched between the state where the plate member 103 is housed in the body 101 and the state where the plate member is projected from the body 101.

The guide portion guides the plate member 103 to enter in and come out of the housing space 101s of the body 101. Specifically, in the guide portion, conventionally well-known slider mechanisms directed toward the depth side are formed on both sides of the opening of the body 101, each of the slider mechanisms is connected with each side of the plate member 103, and the motion of the plate member 103 is guided when the slider mechanisms are slid.

The 3D model M functions as the movable member where the plate member 103 is guided by the guide portion to enter in and come out of the body 101 by the motion of the power source. The indicator 104 is turned on or turned off in accordance with the state of the plate member 103. Specifically, the indicator 104 is turned off in a state that the plate member 103 is housed in the body 101 (shown in Fig. 4(A)), and the indicator 104 is turned on in a state that the plate member 103 is projected from the body 101 (shown in Fig. 4(B)).

As shown in Fig. 5, the 3D model M opens the housing space 101s when the door member 105 of the body 101 is opened. Consequently, the display 21 can shift the display state from the state that the plate member 103 is housed in the housing space 101s (shown in Fig. 5(A)) to the state that the plate member 103 is projected (shown in Fig. 5(B)).

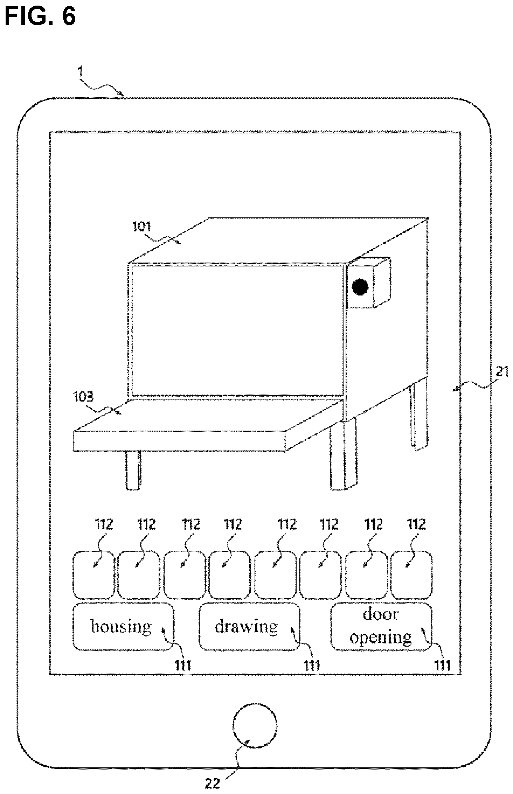

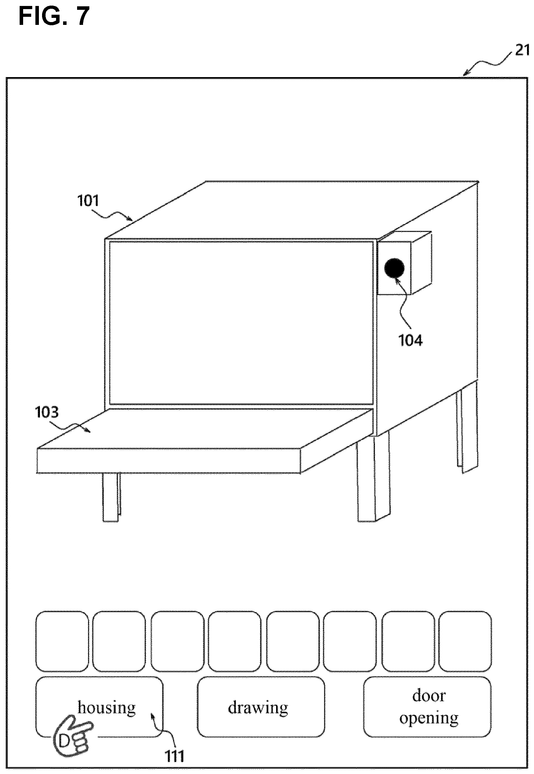

Next, the display state of the 3D model M and the operation of the 3D model M in the portable terminal 1 displaying the above described 3D model M will be explained. Fig. 6 is a plan view showing the portable terminal 1 in a state that the 3D model is displayed on the display 21. Figs. 7-17 are screen diagrams showing the display 21 on which the 3D model M is displayed.

As shown in Fig. 6, the display 21 displays various buttons 111 and icons 112 in addition to the 3D model M in a state that the plate member 103 is projected. When the various buttons 111 and icons 112 displayed on the display 21 are contacted (touched) by the fingertip of the user of the portable terminal 1, the display state of the display 21 is changed.

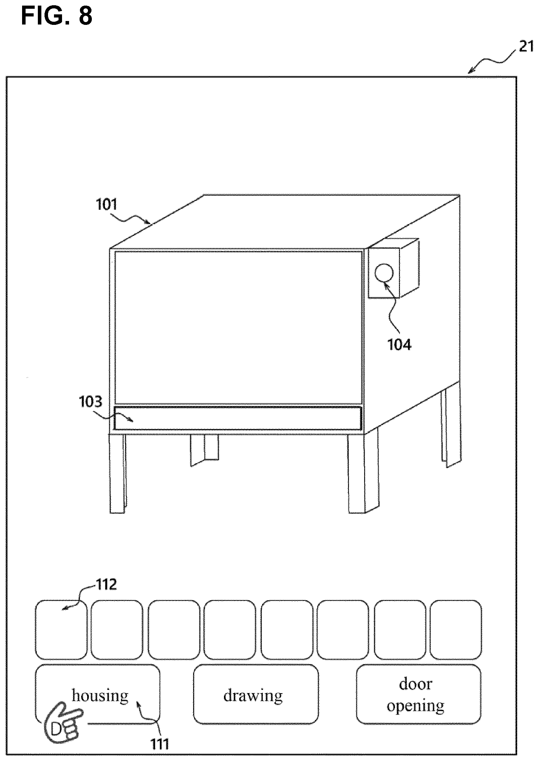

As shown in Fig. 7, when the user of the portable terminal 1 touches a housing button 111 (automatic motion selection means) displayed on the display 21, the plate member 103 is moved by an automatic motion program and automatically housed inside the body 101. Thus, the plate member 103 is changed to the housed state (shown in Fig. 8). At that time, the indicator 104 is turned off from the turned-on state while interlocking with the motion of the plate member 103. Note that an indication mark D shows a state that the fingertip of the user is touched.

Here, the storage 23 stores a movable speed data of the plate member (i.e., movable member) as the operation information of the 3D model M, and the plate member 103 is moved at the specified movable speed when the plate member 103 is automatically housed. Thus, sense of massiveness or sense of high quality can be increased as the speed of moving the plate member 103 becomes slow, for example. In addition, since the indicator 104 is interlocked with the plate member 103, the indicator 104 is turned off more slowly as the speed of moving the plate member 103 becomes slow.

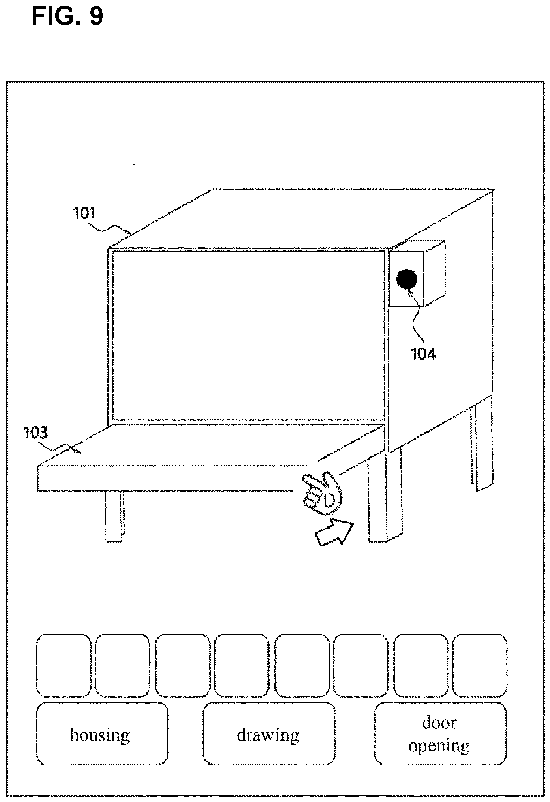

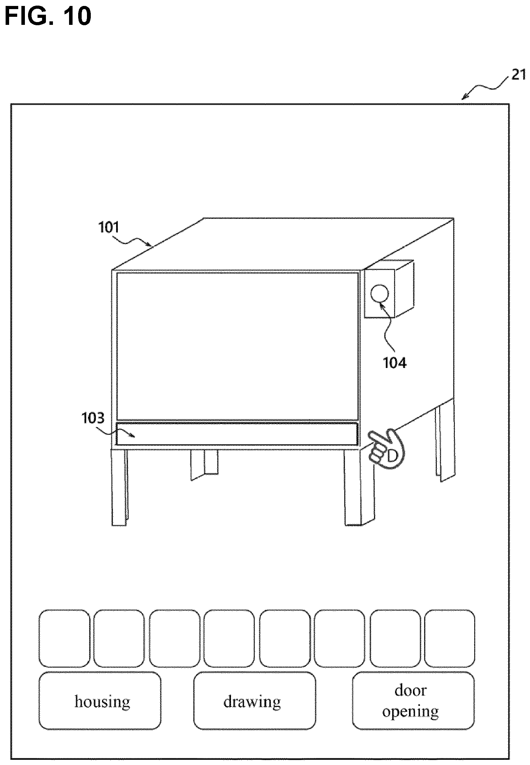

Alternatively, as shown in Fig. 9, when the user touches the plate member 103 and swipes it to the body 101 side, the plate member 103 is housed inside the body 101 corresponding to the motion of swiping (shown in Fig. 10). Specifically, the plate member 103 is housed in the body 101 in accordance with the swiping speed of the user.

The indicator 104 is turned off from the turned-on state while interlocking with the motion of the plate member 103. Here, the storage 23 stores the movable speed data as the operation information of the 3D model M, and the plate member 103 is prevented from moving at the speed exceeding the specified movable speed when the swiping speed is faster than the predetermined speed also when the plate member 103 is manually housed.

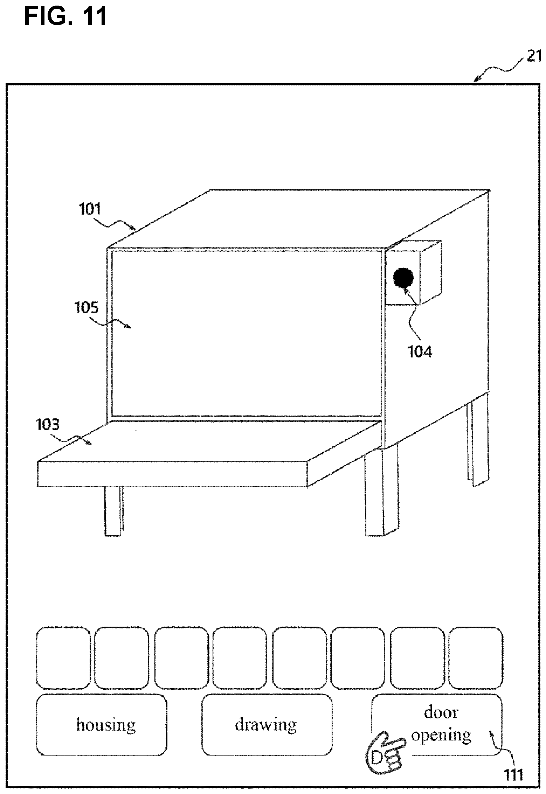

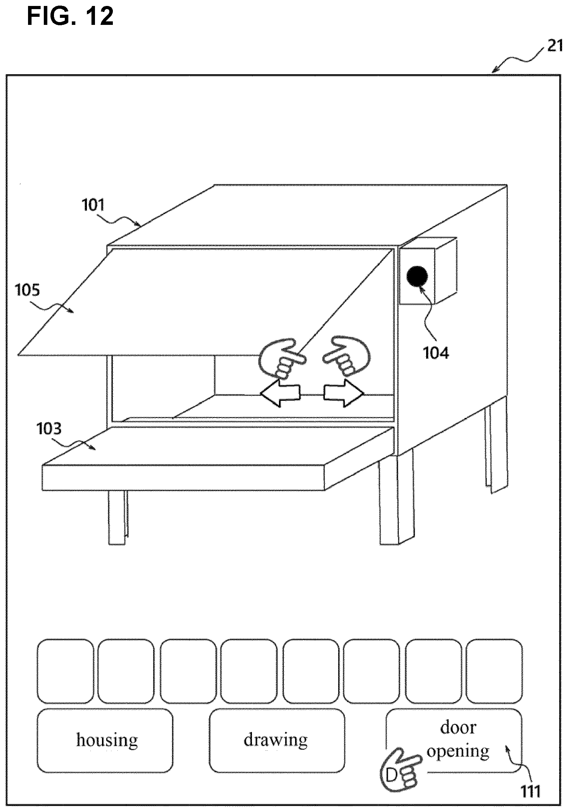

Alternatively, as shown in Fig. 11, when a door opening button 111 of the body 101 is touched, the door member 105 is rotated and opened. Thus, the front surface of the body 101 opens, and the door member 105 is shifted to the open state (shown in Fig. 12). Note that the door member 105 can be rotated when the user touches the door member by the fingertip and swipes the door member 105 so as to be rotated.

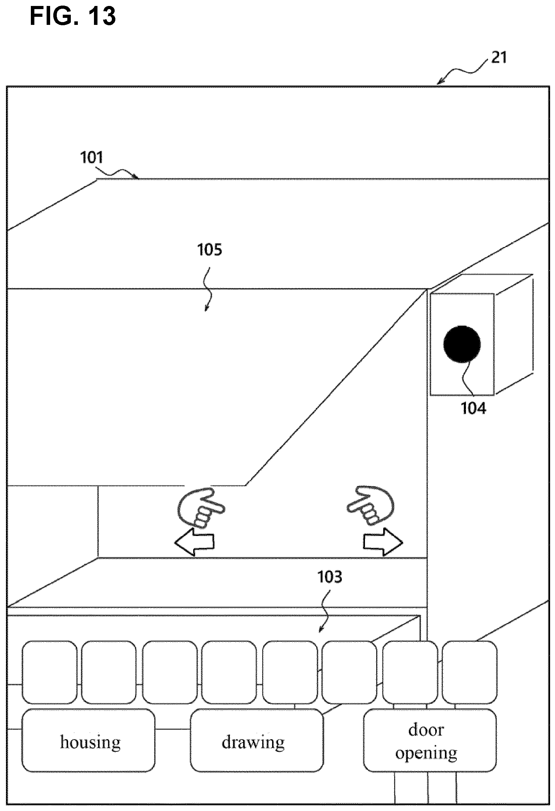

Furthermore, as shown in Fig. 12, when the user operates (pinches out) the housing space 101s of the body 101 to be expanded in a state that the door member 105 is opened, the display 21 displays the inside of the body 101 in an enlarged state (shown in Fig. 13). Here, the storage 23 stores the shape information of the body 101, and the inside of the housing space 101s can be displayed in detail when the housing space 101s is enlarged.

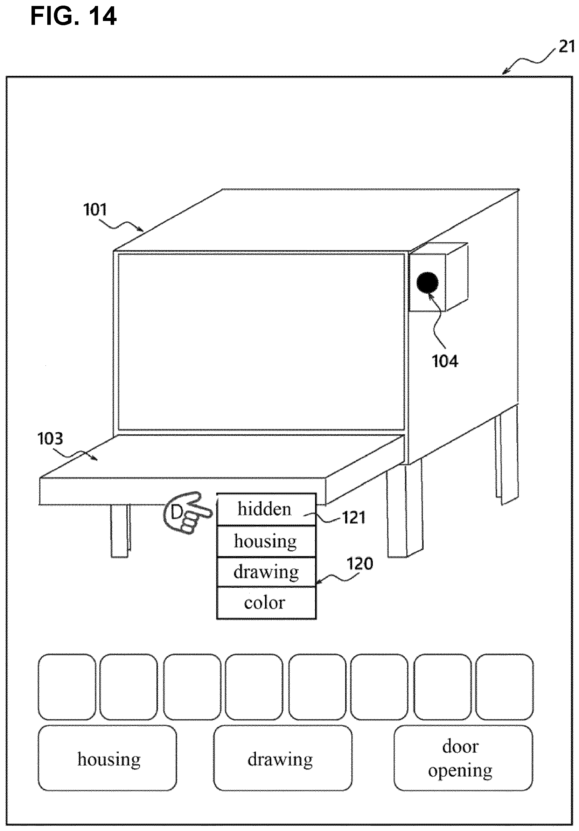

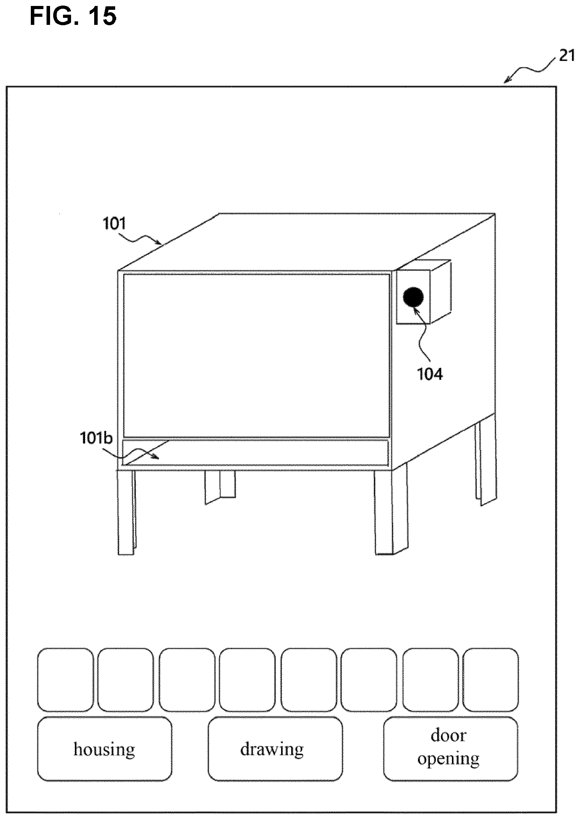

In addition, as shown in Fig. 14, when the plate member 103 is touched for a predetermined time period, a window 120 including a "hidden" button 121 is displayed. When the "hidden" button 121 is touched, the plate member 103 can be hidden (not-displayed) on the display 21 (shown in Fig. 15). When the inside of the body 101 is enlarged and displayed in a state that the plate member 103 is not displayed, a bottom portion 101b hidden under the plate member 103 of the housing space 101s of the body 101 having a rectangular parallelepiped shape can be seen.

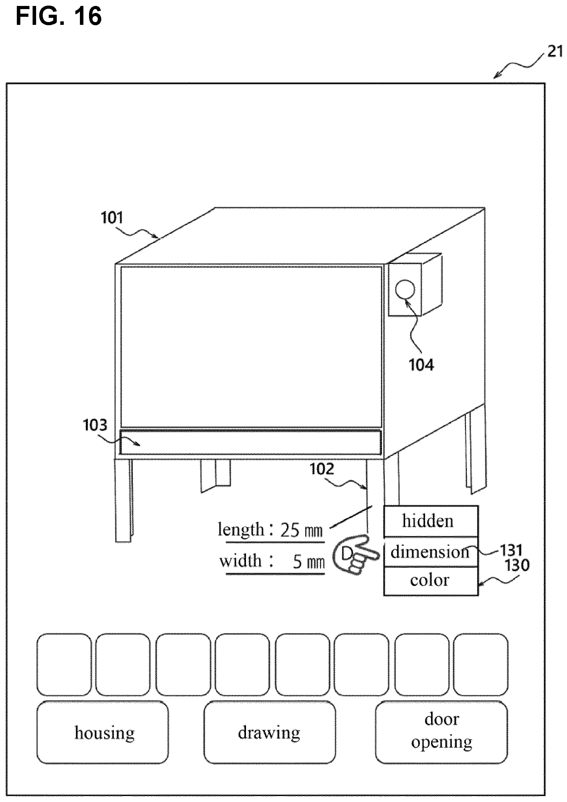

In addition, the display 21 can display the additional information. For example, as shown in Fig. 16, when the part of the legs 102 is touched, a window 130 including a "dimension" button 131 is displayed. When the "dimension" button 131 is selected, the length dimension of the legs 102 is displayed.

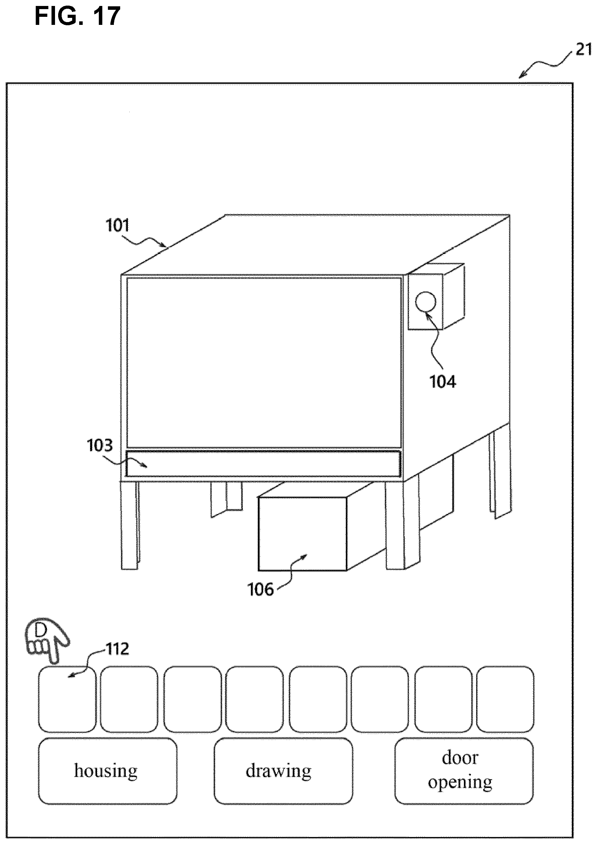

In addition, the display 21 can display the accessories by touching icons. For example, as shown in Fig. 17, the state of arranging a box 106 under the body 101 as an accessory can be displayed. In addition, a caution indicating impossibility of the arrangement can be displayed, for example, when the box cannot be arranged as an accessory in relation to the body 101 in a state that the accessory is displayed.

### [Second example]

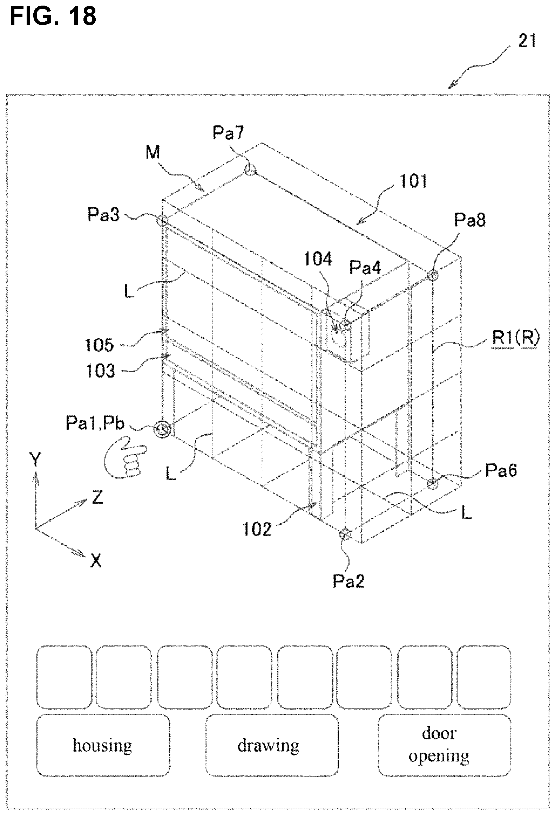

Then, the second example of the 3D model M displayed on the portable terminal 1 concerning the embodiment of the present invention will be explained with reference to Figs. 18-21. Fig. 18 is a screen diagram showing the 3D model M of the actual equipment displayed on the display 21.

Same as the actual equipment of the first example, the actual equipment of the 3D model M of the present embodiment has an approximately rectangular body 101 which is supported by four legs 102, a plate member 103 which is housed in the body 101 and moves so as to protrude frontward of the body 101, a power source (not illustrated) for moving the plate member 103, a guide portion (not illustrated) which is provided on the body 101 for guiding the motion of the plate member 103, and an indicator 104 which is provided on the front surface of the body 101.

The additional information of the portable terminal 1 includes dimension reference information for grasping the dimension of the 3D model M in addition to the already described list of the accessories, price list, specification table, moving image, voice, caution sentence and the like. The display 21 can display the dimension reference information together with the 3D model M.

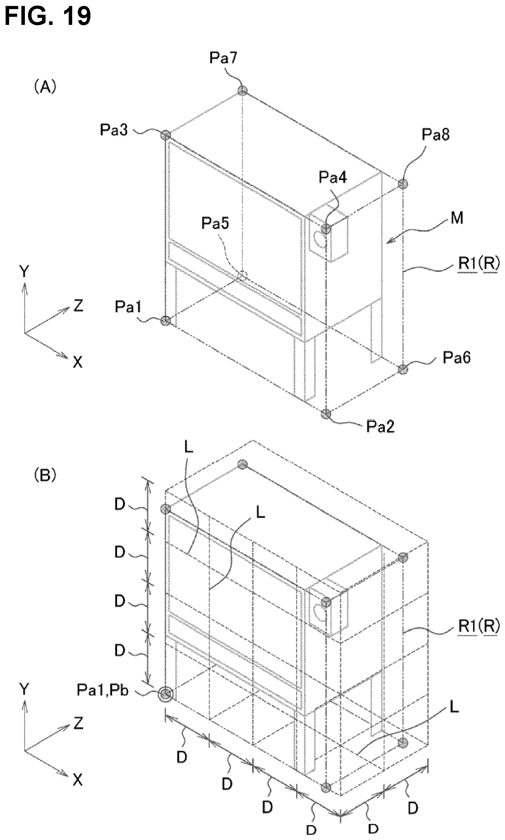

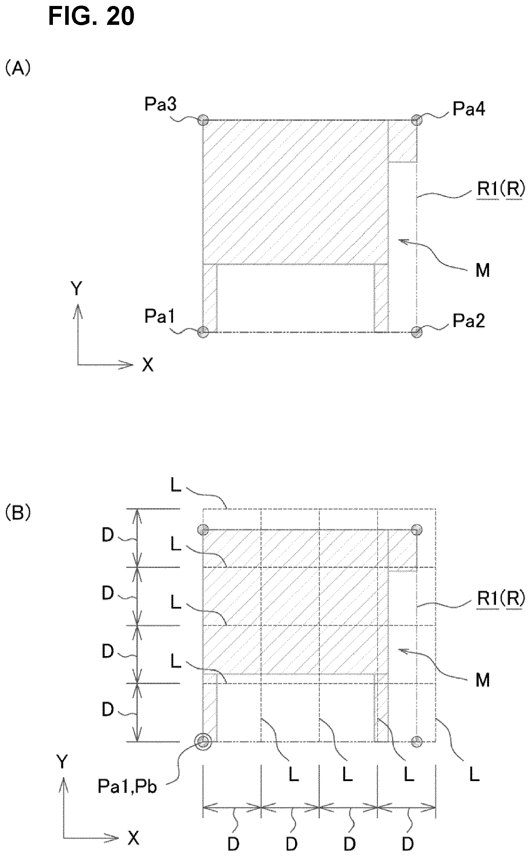

As shown in Fig. 19(B) and Fig. 20(B), the dimension reference information is displayed at regular intervals (distance D) for indicating the dimension in the virtual space displayed on the display 21. For example, when the width direction of the 3D model M is defined as X-direction, the height direction is defined as Y-direction, and the depth direction is defined as Z-direction, the dimension reference information displays grid lines L at regular intervals (distance D) in the X-direction, Y-direction and Z-direction in the virtual space of the display 21.

Note that the distance D can be arbitrarily selected by an operation of the user. For example, the distance D (e.g., 2 cm, 5 cm, 10 cm) can be displayed so as to correspond to the selection of the user.

As shown in Fig. 18 and Fig. 19(A), the portable terminal 1 extracts a three-dimensional box-shaped area including an outermost area of the real-time visualized 3D model M as an outer area R in the virtual space for displaying the 3D model M formed on the display 21. In addition, as shown in Fig. 19(B), the portable terminal 1 displays the dimension reference information while the dimension reference information is positioned relatively to the real-time visualized 3D model M by using one point of the outer area R as a reference position Pb.

Specifically, as shown in Fig. 19(A), the portable terminal 1 extracts the outermost positons in the X-direction, Y-direction and Z-direction in the outer shape of the 3D model M. In addition, the portable terminal 1 extracts the area including the outermost positions of the 3D model M as an outer area R1, and extracts apexes of the outer area R1 as outermost positions Pa (Pa1 to Pa8). In other words, it can be said that the outer area R1 is a virtual box capable of housing the 3D model M.

Furthermore, the portable terminal 1 displays the dimension reference information while the dimension reference information is positioned relatively to the 3D model M by using one point (outermost position Pa1 in the example shown in Fig. 18 and Fig. 19(B)) of the outermost positions Pa as a reference position Pb. In other words, the dimension reference information is the additionally displayed information for grasping the dimensions of the 3D model M easily. Therefore, when the operation of changing a viewing angle of the 3D model M or other operation is performed on the display 21, the dimension reference information is displayed in synchronism with the change in the display state of the 3D model M.

As shown in Fig. 19(B), the dimension reference information can be displayed within the range including the outer area R1 of the 3D model M. Specifically, the dimension reference information is displayed so that the range of arranging the grid lines L includes the outer area R1 in the X-direction, Y-direction and Z-direction. In other words, the portable terminal 1 extracts the outer area R1 as a virtual box for accommodating the 3D model M, and displays the dimension reference information as latticed reference lines (grid lines L) so that the external dimension and the sense of scale of the 3D model M can be visually grasped easily.

As described above, the portable terminal 1 can display the dimension reference information in a minimum range (range including the outer area R) required for grasping the sense of scale of the model object. In other words, the dimension reference information (grid lines L) can be prevented from being excessively displayed to conceal the 3D model M in the portable terminal 1. Thus, the result of obstructing the grasp of the sense of scale of the model object can be avoided. As a result, the portable terminal 1 displays the modeling image more simply. Thus, the sense of scale of can be grasped more efficiently and intuitively.

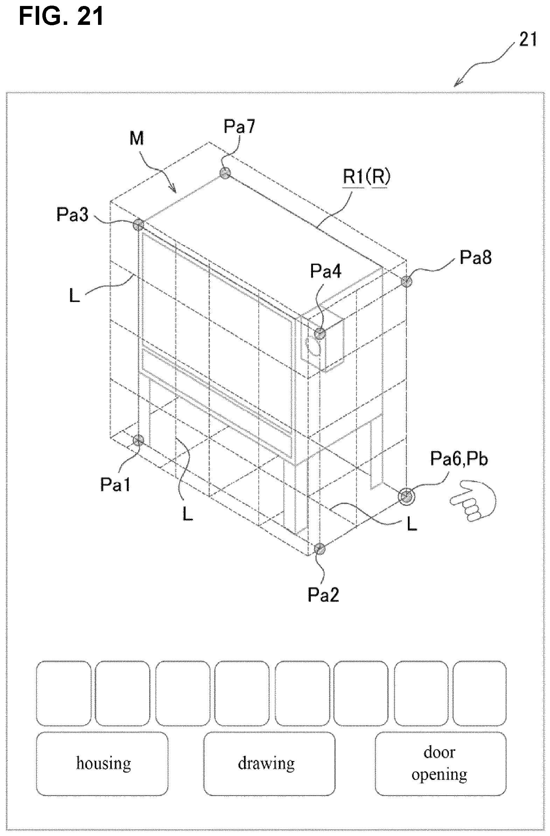

In addition, the dimension reference information can be moved relatively to the 3D model M in the portable terminal 1. For example, the dimension reference information displayed based on the outermost position Pa1 as the reference position in the example shown in Fig. 18 can be also displayed by changing the relative position with respect to the 3D model M based on the outermost position Pa6 (the lower position of the rear side of the 3D model M) as the reference position Pb as shown in Fig. 21.

Consequently, in the portable terminal 1, the user can intuitively grasp, for example, how the model object is arranged within the space for placing the product of the model object or the space required for the installation.

As described above, by using the portable terminal 1, the user can intuitively grasp, for example, how much space is required for arranging the product of the model object within the space (e.g., arranging it in a vacant space in the room or housing it in a box).

### [Third example]

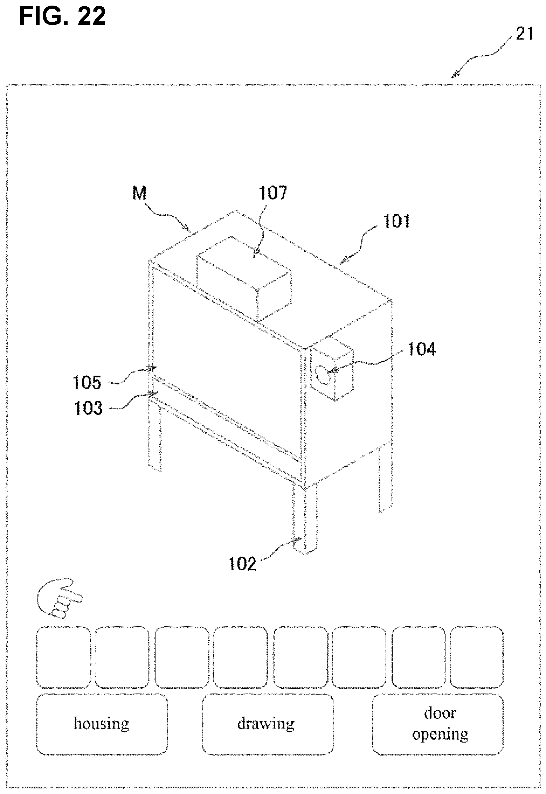

Then, the third example of the 3D model M displayed on the portable terminal 1 will be explained with reference to Figs. 22-24. Fig. 22 is a screen diagram showing the 3D model M of the actual equipment displayed on the display 21.

As shown in Fig. 22, same as the actual equipment of the first example, the actual equipment of the 3D model M of the present embodiment has an approximately rectangular body 101 which is supported by four legs 102, a plate member 103 which is housed in the body 101 and moves so as to protrude frontward of the body 101, a power source (not illustrated) for moving the plate member 103, a guide portion (not illustrated) which is provided on the body 101 for guiding the motion of the plate member 103, and an indicator 104 which is provided on the front surface of the body 101.

In addition, as shown in Fig. 22, the actual equipment of the present embodiment has an upper box 107 as an accessory. In other words, in the present embodiment, the model object (3D model M) having the upper box 107 as an accessory in addition to a product body (body 101, legs 102, plate member 103, indicator 104) as a default product is displayed on the display 21 as a three-dimensional 3D model.

The additional information of the portable terminal 1 includes the accessory information which is the information related to the accessories attachable to the model object of the 3D model M. More specifically, the "accessories" are the things (e.g., optional products) additionally attachable to the standard product (product body) of the model object by the selection of the user. The additional information includes accessory information which is the information related to the shape information, the surface information and the like of the accessories as the information related to the accessories.

The portable terminal 1 can display the accessory information only when the 3D model M is displayed in a state that the upper box 107 (accessory) is attached to the model object (product body). In addition, the portable terminal 1 can display the dimension reference information in a state that the 3D model M with the accessories is displayed.

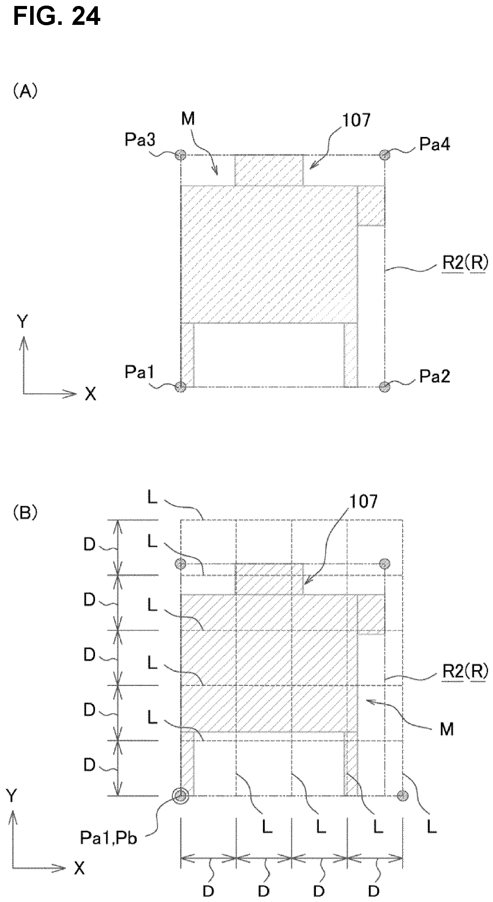

Specifically, as shown in Fig. 24(A), the portable terminal 1 extracts the outermost positons in the X-direction, Y-direction and Z-direction in the outer shape of the 3D model M in a state that the upper box 107 (accessory) is attached. In addition, the portable terminal 1 extracts the area including the outermost positions of the 3D model M in a state that the upper box 107 (accessory) is attached.

In other words, compared to the outer area R1 of the 3D model M when the product body is considered as the model object, the portable terminal 1 can display the outer area R in an enlarged state (outer area R2) in accordance with the enlargement of the outer shape for the 3D model M where the accessory (upper box 107) is attached to the product body and the outer shape is enlarged.

Furthermore, as shown in Fig. 24(A), the portable terminal 1 extracts the outermost positons in the X-direction, Y-direction and Z-direction in the outer shape of the 3D model M in a state that the accessory (upper box 107) is attached to the product body. In addition, the portable terminal 1 extracts the area including the outermost positions of the 3D model M including the product body and the accessories as an outer area R2, and extracts apexes of the outer area R2 as outermost positions Pa (Pa1 to Pa8).

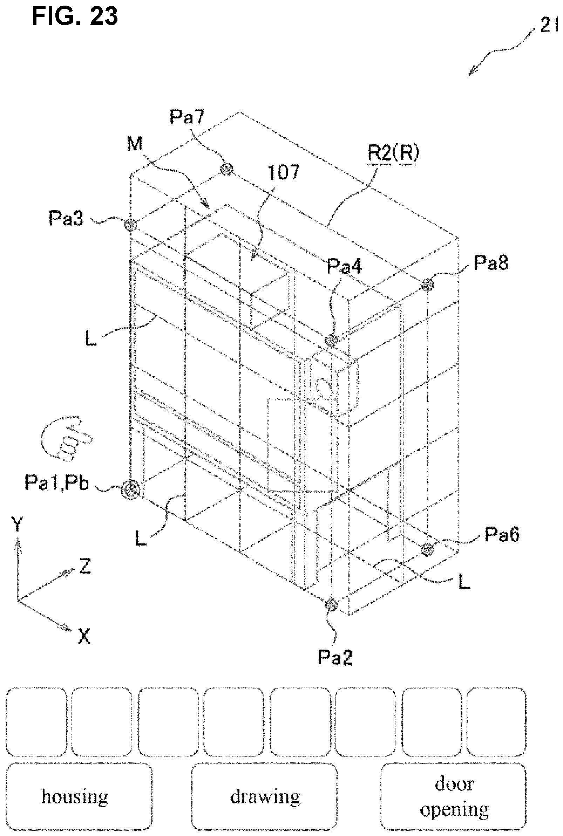

In addition, as shown in Fig. 23 and Fig. 24(B), the dimension reference information is displayed within the range including the outer area R2 of the 3D model M in a state that the upper box 107 (accessory) is attached to the model object. Specifically, the dimension reference information is displayed so that the range of arranging the grid lines L includes the outer area R2 in the X-direction, Y-direction and Z-direction.

Furthermore, the portable terminal 1 displays the dimension reference information while the dimension reference information is positioned relatively to the 3D model M by using one point (outermost position Pa1 in the example shown in Fig. 23 and Fig. 24(B)) of the outermost positions Pa as a reference position Pb. Same as the second example, the portable terminal 1 can display the dimension reference information by changing the reference position Pb which functions as the reference for displaying the dimension reference information from the outermost position Pa1 to other outermost positions Pa.

As described above, by using the portable terminal 1, the user who considers to add the accessories can preliminarily judge whether or not the product of the model object can be arranged on the space while the accessories are attached. Namely, the user can preliminarily judge whether or not the accessories are attachable while considering the space for arranging the product in the three-dimensional direction.

As explained in the first example, the portable terminal 1 can display the 3D model M so that the state is switched between the state where the plate member 103 is housed in the body 101 and the state where the plate member is projected from the body 101. When the above described open/close motions of the door member 105 of the 3D model M are displayed, the portable terminal 1 can display the dimension reference information both before and after the switch between the open state and the closed state.

Furthermore, since the portable terminal 1 has the shape information of the 3D model M, the storage 23 stores the outer dimensions of the 3D model M. Accordingly, in the portable terminal 1, if the dimensions of the place to install the actual equipment of the 3D model are known, the user can judge whether or not the actual equipment of the 3D model can be arranged. Furthermore, in the portable terminal 1, it is also possible to photograph the dimensions of the place to install the actual equipment by a camera of the input device 16 and judge whether or not the actual equipment of the 3D model can be arranged by using Augmented Reality technology.

Furthermore, in the portable terminal 1, if a route for arranging the actual equipment of the 3D model is known, the user can judge whether or not the actual equipment of the 3D model can be carried into the place to install the actual equipment. Furthermore, in the portable terminal 1, it is also possible to photograph the dimensions of each parts of the route to install the actual equipment by a camera of the input device 16 and judge whether or not the actual equipment of the 3D model can be carried into the place to install the actual equipment by using Augmented Reality technology.

Furthermore, the operations of the portable terminal 1 in the above described embodiments are transmitted to the management server S as the operation log. The management server S stores and accumulates a large amount of operation log, and the artificial intelligence equipped with the management server S analyzes the operations of the portable terminal 1 from the large amount of operation log.

As described above, in the present embodiment, the display 21 can display the motions like the actual equipment by operating the 3D model M for showing the properties of the 3D model M. Conventionally, for example, when a mechanical device where a body is surrounded by outer panels is displayed on a display, an internal structure of the body cannot be visually recognized unless a 3D data is separately prepared. However, a program for enabling to view the internal structure through the outer panels by moving the outer panels or enlarging the outer panels can be incorporated in the application for displaying the 3D model of the present embodiment.

Thus, when the application for displaying the 3D model of the present embodiment is used as a business tool, the user who performs the business activities using the tool can display the motions like the actual equipment on the portable terminal 1, and the user can freely show the properties and characteristics of the mechanical device by operating the screen. In particular, since the operation of the 3D model can be performed by the touch panel, affordance is given to the user who uses the portable terminal 1 and a feeling as if the user operates a real product (i.e., model object) is given to the user.

In addition, in the portable terminal 1 of the present embodiment, since the 3D model M displayed on the display 21 can be easily operated, a person who considers to purchase the mechanical device can obtain the information to be known for the purchase according to his/her own will by repeatedly viewing the 3D model M on the portable terminal 1 using the application and repeatedly operating the particularly interesting portion of the 3D model M which moves like the actual equipment, for example. Thus, purchase interest can be enhanced.

Furthermore, when buying and selling of the mechanical device (i.e., object of 3D model M) is established from the operation log operated by a person in charge of business as the user or the operation log operated by a customer as the user, for example, characteristic parts of the operation pattern can be collected from the operation log by the artificial intelligence. Thus, the operation log guessed to be related to the decision of buying and selling of the mechanical device can be obtained.

The above described operation log is shared by a plurality of users who are in charge of business. Thus, sales activity of the mechanical device can be performed smoothly. In particular, even a person in charge of business with bad business performance can increase the probability of establishing the buying and selling by using the operation log as the reference of the way of showing the mechanical device.

Furthermore, it is also possible to perform behavior analysis and psychological analysis from the aggregate of the operation log of each user by the artificial intelligence. For example, the behavior analysis of analyzing which part of the mechanical device attracts the user, or the behavior analysis of analyzing that a particular operation tends to make the user lose interest are possible.

In addition, the buttons 111 or the icons 112 for presenting the accessories of the mechanical device can be arranged on the display 21 of the portable terminal 1. When the button 111 or the icon 112 is touched, the displayed accessory can be added to the 3D model M of the mechanical device. It is also possible to shift the accessory device to a non-displayed state when the icon 112 is touched again.

Thus, when the displayed state and the non-displayed state of the same accessory are repeatedly shifted, it can be judged that the user is interested in the accessory, for example. By using this, a person in charge of business memorizes which accessory button 111 is most often touched by the customer from a plurality of displayed accessory buttons 111. Thus, the accessory can be promoted to the customer as a recommended item and an important item of the future business activities.

However, since the intuition of the human often varies depending on the environment, physical condition and state of feeling, the accessory seemed to be attracted by the customer may not be actually attracted by the customer. Thus, when a popular accessory is judged by using the artificial intelligence, the accessory operated with an intension of really required can be clearly derived by analyzing the behavior of the customer. Namely, the hidden feeling of the customer can be derived by using the artificial intelligence without depending on the intuition of the human.

The analyzing work performed by AI can be also performed by an operator of the management server S. However, analysis of complicated and large amount of operation log is required for the operation of the 3D model M. Accordingly, the analysis is preferably performed by AI without requiring the operator.

The present embodiment shows the example of turning on and off the indicator 104 in accordance with the motion of the plate member 103 (movable member). However, a turning-off button 111 or a turning-off button 111 of the indicator 104 can be separately displayed on the display 21. Thus, the turning-on and the turning-off can be selected without depending on the motion of the movable member.

In that case, the storage 23 stores the turning-on speed data or the turning-off speed data as the operation information of the 3D model M, and the time before the indicator 104 is blinked and the time before the indicator 104 is turned off can be specified. Thus, sense of massiveness can be increased by delaying the time of turning on the indicator 104, for example.

In the present embodiment, the embodiment of turning on and turning off the indicator 104 in accordance with the motion of the plate member 103 (movable member) is shown. However, the indicator 104 can be an indicator for indicating temperature, pressure, speed and the like, or an illustrating device for illustrating the operation state of the movable member.

The above described explanations about the specified embodiments of the present invention are provided for exemplifying purposes. The explanations are not intended for comprehensively describing the present invention or limiting the present invention as it is.
It is obvious for a person skilled in the art that a lot of modification and change are possible by referring to the above described contents.

### [Industrial Applicability]

The portable terminal and the management server of the present invention can display realistic texture and motions of the 3D mode, display the detailed information of the model object in real time, and obtain the operation log at the site of the business activities of the company, for example.

### [Description of the Reference Numerals]

IN: Internet
1: portable terminal
2: management server
20: controller
21: display
22: operation portion
23: storage
24: communication unit
25: authentication unit
101: body
102: legs
103: plate member (movable member)
104: indicator
111: various buttons (automatic motion selection means, and the like)
M: 3D model
IN: Internet

## Claims

1. A portable terminal, comprising:
a display capable of displaying:
a real-time visualized 3D model which is a three-dimensionally visualized image of a model object where a display state of the model object is changed in real time; and
additional information related to the model object;
a plurality of operation portions for changing the display state of the real-time visualized 3D model and the additional information displayed on the display by an operation of a user; and
a controller for controlling the display and the operation portions.

2. The portable terminal according to claim 1, wherein
the model object has a movable member,
the display includes a touch panel display to function as the operation portions, and
the movable member of the real-time visualized 3D model is configured to be moved when the user operates the touch panel display by making a fingertip contact the touch panel display.

3. The portable terminal according to claim 1 or 2, wherein
the model object has a movable member,
the operation portions have an automatic motion selection means which makes the movable member automatically perform a predetermined motion in the real-time visualized 3D model, and
the movable member is configured to automatically perform the predetermined motion in the real-time visualized 3D model when the automatic motion selection means is operated.

4. The portable terminal according to any one of claims 1 to 3, wherein
the model object has an indicator which can be turned on or turned off,
the operation portions have a turning-on selection means which turns on the indicator in the real-time visualized 3D model or has a turning-off selection means which turns off the indicator in the real-time visualized 3D model,
the indicator is turned on in the real-time visualized 3D model when the turning-on portion is selected, and
the indicator is turned off in the real-time visualized 3D model when the turning-off portion is selected.

5. The portable terminal according to any one of claims 1 to 4, wherein
the additional information includes information including at least one of a list of the accessories, a price list, a specification table, a moving image, a voice and a caution sentence which are related to the real-time visualized 3D model.

6. The portable terminal according to any one of claims 1 to 5, further comprising:
an authentication unit which is connected with a management server which acquires operation information operated on the operation portions so that the authentication unit authenticates the user, wherein
the portable terminal authenticates the user and stores the operation information for each user.

7. The portable terminal according to any one of claims 1 to 6, wherein
the additional information includes dimension reference information for grasping dimensions of the real-time visualized 3D model, and
the display can display the dimension reference information together with the real-time visualized 3D model.

8. The portable terminal according to claim 7, wherein
when a three-dimensional box-shaped area including an outermost area of the real-time visualized 3D model in a three-dimensional direction is defined as an outer area in a virtual space for displaying the real-time visualized 3D model on the display, the dimension reference information is displayed while the dimension reference information is positioned relatively to the real-time visualized 3D model by using one point of the outer area as a reference position.

9. The portable terminal according to claim 7 or 8, wherein
the position of the dimension reference information can be moved relatively to the real-time visualized 3D model.

10. The portable terminal according to any one of claims 7 to 10, wherein
when a three-dimensional box-shaped area including an outermost area of the real-time visualized 3D model in a three-dimensional direction is defined as an outer area in a virtual space for displaying the real-time visualized 3D model on the display, the dimension reference information can be displayed in a range including the outer area of the real-time visualized 3D model.

11. The portable terminal according to any one of claims 1 to 10, wherein
the additional information includes accessory information which is information related to accessories attachable to the model object of the real-time visualized 3D model, and
the accessory information can be displayed only when the real-time visualized 3D model is displayed while the accessories are attached to the model object.

12. The portable terminal according to claim 11, wherein
the dimension reference information can be displayed in a state that the real-time visualized 3D model is displayed while the accessories are attached to the model object.

13. The portable terminal according to claim 11 or 12, wherein
when a three-dimensional box-shaped area including an outermost area of the real-time visualized 3D model in a three-dimensional direction is defined as an outer area in a virtual space for displaying the real-time visualized 3D model on the display, the dimension reference information can be displayed in a range including the outer area of the real-time visualized 3D model while the accessories are attached to the model object.

14. A management server configured to be connected with the portable terminal according to any one of claims 1 to 13, wherein
the management server obtains the operation information operated on the operation portions.

15. The management server according to claim 14, further comprising:
an artificial intelligence, wherein
the artificial intelligence establishes an optimum operation method of the operation portions based on the obtained operation information.

16. The management server according to claim 14 or 15,
wherein the portable terminal has a GPS function; and
the portable terminal obtains moving information of an owner of the portable terminal by the GPS function.
